# EUROPEAN PATENT APPLICATION

(11) **EP 4 589 175 A1**
(43) Date of publication of application: **23.07.2025**
(21) Application number: 24866894.9
(22) Date of filing: 24.05.2024
(51) Int. Cl.: F16H 57/02, F16H 57/04

(54) **DEDICATED HYBRID TRANSMISSION OIL BAFFLE, DEDICATED HYBRID TRANSMISSION, AND VEHICLE**

(30) Priority: 21.09.2023 CN 202322575247 U
(71) Applicant: Chery Automobile Co., Ltd., Wuhu, Anhui 241006 (CN)
(72) Inventor: SHU, Meizhen, Wuhu, Anhui 241006 (CN); LI, Yanan, Wuhu, Anhui 241006 (CN); ZU, Fei, Wuhu, Anhui 241006 (CN); YU, Song, Wuhu, Anhui 241006 (CN)
(74) Representative: Yang, Shu
(86) International application number: PCT/CN2024/095284
(87) International publication number: WO 2025/060471

(57) **Abstract**

An oil baffle of the dedicated hybrid transmission includes an oil baffle body and a connection part, the oil baffle body is an arc-shaped plate and is used for enclosing a gear position driven gear of the dedicated hybrid transmission. The connection part is connected to the oil baffle body and used for fixing the oil baffle on a transmission housing of the dedicated hybrid transmission. The oil baffle of the hybrid power transmission provided by the present application can shield and guide the oil-stirring movement of the gear teeth of the output shaft in the transmission, shorten the oil splashing path, reduce the oil bubble content, and improve the transmission efficiency of the transmission.

## Description

The present application claims priority to Chinese Patent Application No. 202322575247.3, filed on September 21, 2023 and entitled "OIL BAFFLE FOR DEDICATED HYBRID TRANSMISSION", the entire content of which is incorporated herein by reference.

### TECHNICAL FIELD

The present application relates to the technical field of transmission components, in particular to an oil baffle for a dedicated hybrid transmission, a dedicated hybrid transmission and a vehicle.

### BACKGROUND

A hybrid vehicle combines two power sources of an engine and a motor to provide power for a vehicle through a power coupling device, in which a dedicated hybrid transmission is a key component to achieve power coupling.

The hybrid transmission contains engine oil for lubricating moving parts within the transmission, such as an output shaft, a differential gear, etc. When the hybrid vehicle runs at a high speed, an output shaft of the hybrid special transmission and the differential gear rotate at a high speed in the oil, which stirs the oil and makes the oil splash everywhere in a transmission housing. This phenomenon of oil stirring increases the oil temperature of the transmission and produces a large number of bubbles. Compressibility of foam in the oil easily leads to the pressure fluctuation of a hydraulic system and a decrease of oil pressure. At the same time, it increases the loss of oil stirring, that is, it reduces a transmission efficiency of mechanical components.

### SUMMARY

The present application aims to provide an oil baffle for a dedicated hybrid transmission, a dedicated hybrid transmission, and a vehicle.

In order to achieve the above purpose, the technical solution adopted by the present application is as follows.

A first aspect of embodiments of the present application provides an oil baffle for a dedicated hybrid transmission, where the oil baffle includes an oil baffle body and a connection part,
the oil baffle body is an arc-shaped plate and is configured to enclose a part of a gear position driven gear in the dedicated hybrid transmission; and
the connection part is connected to the oil baffle body and is configured to fix the oil baffle on a transmission housing of the dedicated hybrid transmission.

Optionally, the connection part includes a first mounting foot and a second mounting foot, a distal end of the first mounting foot away from the oil baffle body is provided with a first mounting hole, and a distal end of the second mounting foot away from the oil baffle body is provided with a second mounting hole; and the oil baffle is fixedly connected to the transmission housing via a first fastener passing through the first mounting hole and a second fastener passing through the second mounting hole.

Optionally, the oil baffle body includes a first side wall and a second side wall which are opposite to each other in an axial direction of the oil baffle body, and the axial direction is an extending direction of a central axis of the oil baffle body;
the oil baffle further includes an oil baffle extension, one side of the oil baffle extension is connected to a portion of the first side wall, and another side of the oil baffle extension extends away from the second side wall along the axial direction of the oil baffle body; and
an orthographic projection of the oil baffle extension on a set plane is partially overlapped with an orthographic projection of the oil baffle body on the set plane, and the set plane is perpendicular to the axial direction of the oil baffle body.

Optionally, the first side wall includes a first portion and a second portion circumferentially connected along the oil baffle body,
the first portion is connected to the oil baffle extension, and a portion of the oil baffle extension is located on a side of the first portion away from the second portion;
the second portion is connected to the first mounting foot and the distal end of the first mounting foot extends in a direction away from an inner surface of the oil baffle body; and
the second mounting foot is connected to the second side wall, and the distal end of the second mounting foot extends in the direction away from the inner surface of the oil baffle body.

Optionally, an inner surface of the oil baffle body is a smooth arc-shaped plate surface, and/or
the oil baffle extension is an arc-shaped plate and an inner surface of the oil baffle extension is a smooth arc-shaped plate surface.

Optionally, the oil baffle body includes a first plate and a second plate which are connected in the axial direction of the oil baffle body, the first plate is connected to the oil baffle extension, the second plate is located at a side of the first plate away from the oil baffle extension, plate surfaces of the first plate and the second plate are both arc-shaped, and the axial direction of the oil baffle body is the extending direction of the central axis of the oil baffle body; and
the first plate is closer to the central axis of the oil baffle body than the second plate in a thickness direction of the oil baffle body.

Optionally, the oil baffle extension includes a third plate and a fourth plate connected in an axial direction of the oil baffle extension, the third plate is connected to the oil baffle body, the fourth plate is located at one side of the third plate away from the oil baffler body, plate surfaces of the third plate and the fourth plate are both arc surfaces, the axial direction of the oil baffle extension is an extending direction of a central axis of the oil baffle extension; and
the third plate is closer to the central axis of the oil baffle extension than the fourth plate in a thickness direction of the oil baffle extension.

A second aspect of the present application provides an oil baffle for dedicated hybrid transmission, a differential and an output shaft are arranged at a bottom of a transmission housing, the output shaft is located in front of the differential, a differential gear is engaged with an output shaft power output gear at an end of the output shaft, an input shaft is positioned diagonally in front of and above the output shaft, an input gear on the input shaft is engaged with a gear position driven gear on the output shaft, and the input shaft is driven to rotate by torque provided by an engine and/or a motor, and the oil baffle fixedly connected to the transmission housing is spaced apart from a front lower position of the gear position driven gear on the output shaft.

Optionally, the oil baffle extension in the axial direction of the oil baffle extends to the front lower position of the differential gear and encloses a lower area of the output shaft power output gear.

Optionally, the gear position driven gear on the output shaft includes a second-gear driven gear, a first-gear driven gear and a third-gear driven gear, which are arranged adjacent to each other and spaced apart from each other in sequence, a body of the oil baffle is disposed in a front lower position of the first-gear driven gear and the second-gear driven gear.

Optionally, surfaces of the oil baffle body and the oil baffle extension facing the output shaft and/or the differential gear are smooth arc-shaped plate surfaces.

Optionally, a mechanical oil pump fixedly connected with the transmission housing is arranged in front of the oil baffle, an upper edge of the oil baffle extension is lower than an upper edge of the oil baffle body, a first mounting foot extends forward from a stepped transition edge between the upper edge of the oil baffle extension and the upper edge of the oil baffle body, and a second mounting foot extends forward from a left edge of the oil baffle body, and the oil baffle is fixedly connected to the mechanical oil pump by bolts through a first mounting hole disposed at the distal end of the first mounting foot and a second mounting hole disposed at the distal end of the second mounting foot.

Optionally, the oil baffle body includes a first step plate which encloses a front of the second-gear driven gear and is close to the output shaft.

Optionally, the oil baffle extension has a second step plate which is disposed away from the differential gear at a right edge of the oil baffle extension.

A third aspect of the present application provides a dedicated hybrid transmission including a transmission housing, an output shaft, a differential, an input shaft and an oil baffle,
the output shaft and the differential are arranged at a bottom of the transmission housing and the output shaft is located in front of the differential, where the output shaft is provided with an output shaft power output gear at an end of the output shaft and a gear position driven gear, the differential is provided with a differential gear, and the differential gear is engaged with the output shaft power output gear;
the input shaft is positioned diagonally in front of and above the output shaft and is driven to rotate by torque provided by an engine and/or a motor, where the input shaft is provided with an input gear, and the input gear is engaged with the gear position driven gear; and
the oil baffle is fixedly connected to the transmission housing, and the oil baffle encloses a front lower position of the gear position driven gear and is spaced apart from the gear position driven gear.

Optionally, the oil baffle includes an oil baffle body and a connection part,
the oil baffle body is an arc-shaped plate and encloses the gear position driven gear; and
the connection part is connected to the oil baffle body and is fixedly connected to the transmission housing.

Optionally, the gear position driven gear includes a second-gear driven gear, a first-gear driven gear and a third-gear driven gear, which are arranged adjacent to each other and spaced apart from each other in sequence, the second-gear driven gear is closest to the output shaft power output gear, and the oil baffle body is disposed in a front lower position of the first-gear driven gear and the second-gear driven gear.

Optionally, the connection part includes a first mounting foot and a second mounting foot, a distal end of the first mounting foot away from the oil baffle body is provided with a first mounting hole, and a distal end of the second mounting foot away from the oil baffle body is provided with a second mounting hole, the oil baffle is fixedly connected to the transmission housing via a first fastener passing through the first mounting hole and a second fastener passing through the second mounting hole.

Optionally, the dedicated hybrid transmission includes a mechanical oil pump disposed in front of the oil baffle; and
the transmission housing includes a main housing and an oil pump housing of the mechanical oil pump, the oil pump housing is fixedly connected to the main housing, and the oil baffle is fixedly connected to the oil pump housing by the first fastener passing through the first mounting hole and the second fastener passing through the second mounting hole.

Optionally, the oil baffle body includes a first side wall and a second side wall, which are opposite to each other in an axial direction of the oil baffle body, and the axial direction is an extending direction of a central axis of the oil baffle body;
the oil baffle further includes an oil baffle extension, one side of the oil baffle extension is connected to a portion of the first side wall, another side of the oil baffle extension extends to a front lower position of the differential gear in a direction away from the second side wall along the axial direction of the oil baffle body and encloses a lower area of the output shaft power output gear, and the oil baffle extension is spaced apart from the output shaft power output gear; and
an orthographic projection of the oil baffle extension on a set plane is partially overlapped with an orthographic projection of the oil baffle body on the set plane.

Optionally, the first side wall includes a first portion and a second portion circumferentially connected along the oil baffle body,
the first portion is connected to the oil baffle extension, and a portion of the oil baffle extension is located on a side of the first portion away from the second portion;
the second portion is connected to the first mounting foot and the distal end of the first mounting foot extends in a direction away from an inner surface of the oil baffle body; and
the second mounting foot is connected to the second side wall, and the distal end of the second mounting foot extends in the direction away from the inner surface of the oil baffle body.

Optionally, an inner surface of the oil baffle body facing the output shaft and/or the differential gear is a smooth arc-shaped plate surface, and/or
the oil baffle extension is an arc-shaped plate and an inner surface of the oil baffle extension facing the output shaft and/or the differential gear is a smooth arc-shaped plate surface.

Optionally, the oil baffle body includes a first plate and a second plate which are connected in the axial direction of the oil baffle body, the first plate is connected to the oil baffle extension, the second plate is located at a side of the first plate away from the oil baffle extension, plate surfaces of the first plate and the second plate are both arc-shaped, and the axial direction of the oil baffle body is the extending direction of the central axis of the oil baffle body; and
the first plate is closer to the central axis of the oil baffle body than the second plate in a thickness direction of the oil baffle body.

Optionally, the first plate encloses a front of the second-gear driven gear, and the first plate is closer to a central axis of the output shaft than the second plate.

Optionally, the oil baffle extension includes a third plate and a fourth plate connected in an axial direction of the oil baffle extension, the third plate is connected to the oil baffle body, the fourth plate is located at one side of the third plate away from the oil baffler body, plate surfaces of the third plate and the fourth plate are both arc surfaces, the axial direction of the oil baffle extension is an extending direction of a central axis of the oil baffle extension; and
the third plate is closer to the central axis of the oil baffle extension than the fourth plate in a thickness direction of the oil baffle extension.

Optionally, the third plate encloses a lower area of the output shaft power output gear, and the third plate is farther from the differential gear than the fourth plate.

A fourth aspect of the present application provides a vehicle including the oil baffle according to the first aspect or the second aspect, or the dedicated hybrid transmission according to the third aspect.

### BRIEF DESCRIPTION OF DRAWINGS

In order to more clearly illustrate the technical solutions in the embodiments of the present application, the accompanying drawings to be used in the description of the embodiments will be briefly introduced below, and it will be obvious that the accompanying drawings in the following description are only some of the embodiments of the present application, and other accompanying drawings can be obtained according to these drawings for the people of ordinary skill in the field without putting forth any creative labor.
Fig. 1 is a schematic diagram of an internal structure of a dedicated hybrid transmission in the related art;
Fig. 2 is a structural schematic diagram of an oil baffle provided by an embodiment of the present application;
Fig. 3 is an isometric view of an oil shield provided by an embodiment of the present application;
Fig. 4 is an isometric view of an inside of a dedicated hybrid transmission provided by an embodiment of the present application;
Fig. 5 is an isometric view of the inside of the dedicated hybrid transmission provided by an embodiment of the present application with a mechanical oil pump removed;
Fig. 6 is a schematic diagram of a positional relationship between an oil baffle and each gear provided in the embodiment of the present application; and
Fig. 7 is a front view of the oil baffle and each gear as viewed from the front of the vehicle.

Definite embodiments of the present application have been shown by means of the above-described accompanying drawings, which will be described in greater detail later. These accompanying drawings and textual descriptions are not intended to limit the scope of the present application idea in any way, but rather to illustrate the concepts of the present application for those skilled in the art by reference to particular embodiments.

### DETAILED DESCRIPTION

The technical solutions in the embodiments of the present application will be clearly and completely described below in conjunction with the accompanying drawings in the embodiments of the present application. Obviously, the described embodiments are part of the embodiments in the present application, but not all of them. Based on the embodiments in the present application, all other embodiments obtained by those of ordinary skill in the art without creative work fall within the scope of protection of the present application.

In the description of the present application, it should be noted that the orientation or positional relationship indicated by the terms "center", "upper", "lower", "left" and "right", and "front" and "rear" as well as "inner" or "outer" are based on the orientation or positional relationship shown in the drawings, or the orientation and positional relationship after the corresponding structure is installed on the vehicle. It is merely for convenience of description of the present application and simplification of the description, and does not indicate or imply that the devices or elements referred to must have a particular orientation, be constructed in a particular orientation, or operate in a particular manner, and is therefore not to be construed as limiting the present application. Furthermore, the terms "first", "second" and "third" are used for descriptive purposes only and are not to be construed as indicating or implying relative importance.

In addition, the technical features involved in the different embodiments of the present application described below may be combined with each other as long as they do not conflict with each other.

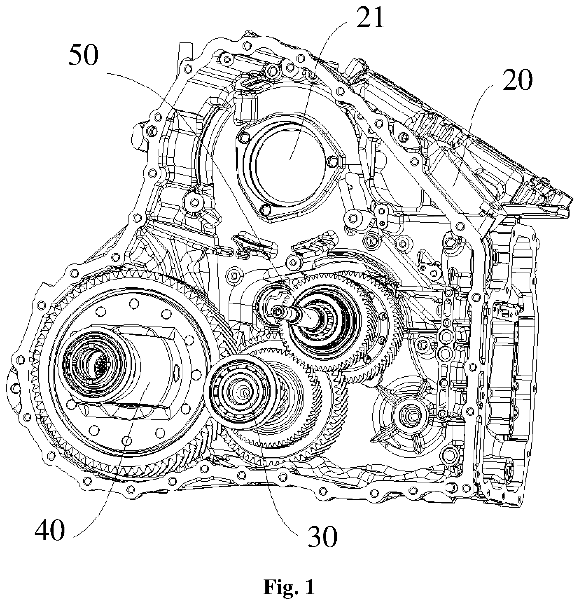

Fig. 1 shows a structure of a dedicated hybrid transmission common in the related art. As shown in Fig. 1, the transmission inputs power through two motors, and an inside of a transmission housing 20 is provided with a motor mounting position 21. The motor mounting position 21 is located at a top end of the transmission housing 20, and a first motor (not shown in the figures) can be arranged in the motor mounting position 21. The first motor can drive an output shaft 30 in the middle of a bottom of the transmission housing 20, and the output shaft 30 transmits power to a differential 40 through gear meshing, thereby driving the vehicle to run. An input shaft 50 is arranged above the output shaft 30, and an engine crankshaft (not shown in the figures) and a second motor (not shown in the figures) are connected in series and are jointly connected to the input shaft 50 to provide power. The power is transmitted to the differential 40 through gear transmission, which is also used to drive the vehicle to run.

When the hybrid vehicle is stationary, the engine oil in the dedicated hybrid transmission as shown in Fig. 1 is still, with its oil level above a central axis of the output shaft 30. When the hybrid vehicle runs at a high speed, the output shaft 30 and the differential 40 of the dedicated hybrid transmission rotate at a high speed in the oil. At this time, shaft teeth on the output shaft 30 and gear teeth of the differential 40 rotate at high speed to stir the oil, so that the oil splashes around in the transmission housing 20. This phenomenon of oil stirring will cause the temperature of the engine oil in the dedicated hybrid transmission to rise, and at the same time, a large number of bubbles will be produced. The compressibility of the bubbles in the oil will easily lead to the pressure fluctuation and oil pressure drop of the hydraulic system, and at the same time, it will increase the oil stirring loss, that is to say, it will cause the transmission efficiency of the mechanical components to drop.

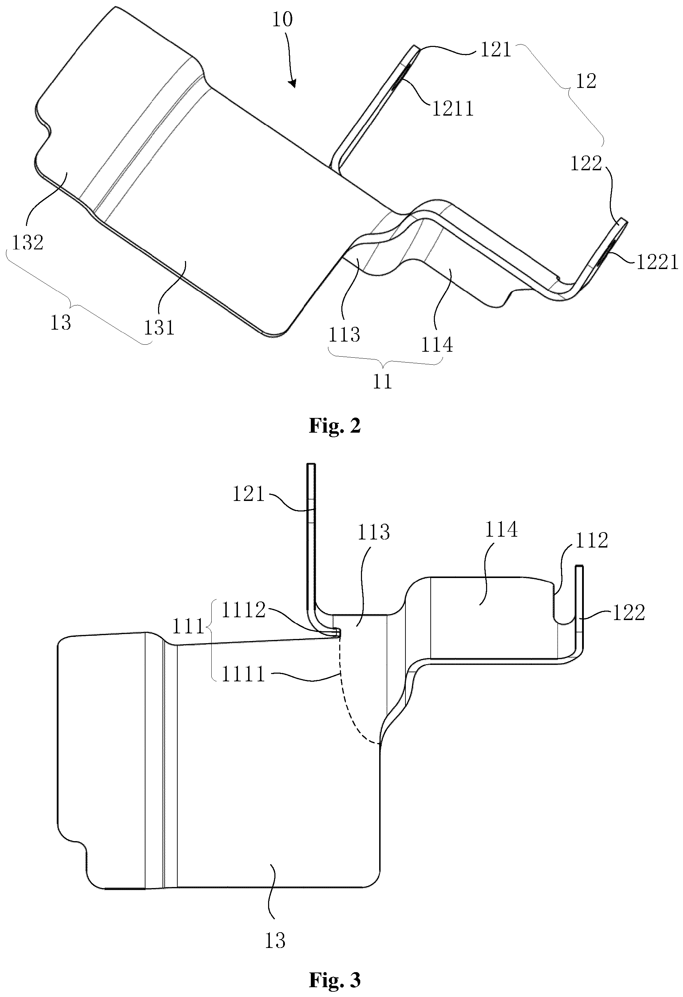

To address the aforementioned issues, the embodiments of the present application provide an oil baffle for a dedicated hybrid transmission, and the structure thereof is illustrated in Figs. 2 and 3. Referring to Fig. 2, the oil baffle 10 includes an oil baffle body 11 and a connection part 12. The oil baffle body 11 is an arc-shaped plate to enclose a gear position driven gear 32 in the dedicated hybrid transmission. The connection part 12 is connected to the oil baffle body 11 and is configured to securely attach the oil baffle 10 to the transmission housing 20 of the dedicated hybrid transmission.

By analyzing the stirring of engine oil by various gears during vehicle operation, the inventors found that the engine oil inside the transmission housing 20 is primarily stirred by the gear position driven gear 32 on the output shaft 30 and a differential gear 41. The output shaft 30 is positioned in a middle of a bottom of the transmission housing 20. A front of the differential gear 41 is obstructed by the gear on the output shaft 30, while remaining directions of the differential gear 41 are enclosed by the transmission housing 20. Therefore, in the dedicated hybrid transmission, the differential gear 41 has a limited effect on oil stirring, and the primary oil-stirring action is generated by the gear position driven gear 32 on the output shaft 30.

Therefore, in the embodiment of the present application, the oil baffle 10 is fixed on the transmission housing 20 and arranged around the gear position driven gear 32, so that when the gear position driven gear 32 on the output shaft 30 generates an oil stirring action to drive the engine oil to splash forward during the driving process of the vehicle, the oil baffle 10 enclosing the gear position driven gear 32 can form a barrier in a parabolic direction of oil splashing, so that the oil splashes onto an inner surface of the oil baffle 10, thereby shortening a splashing distance of the oil. The inner surface of the oil baffle 10 can guide the oil splashed onto the oil baffle 10 back to the inside of the transmission, such that components in the transmission are lubricated by the engine oil, and the same time the generation of bubbles is reduced and the oil stirring loss is also reduced, but the transmission efficiency of mechanical components is improved.

It should be noted that in embodiments of this application, "front" refers to a direction close to the front of the vehicle, and "rear" refers to a direction close to the rear of the vehicle.

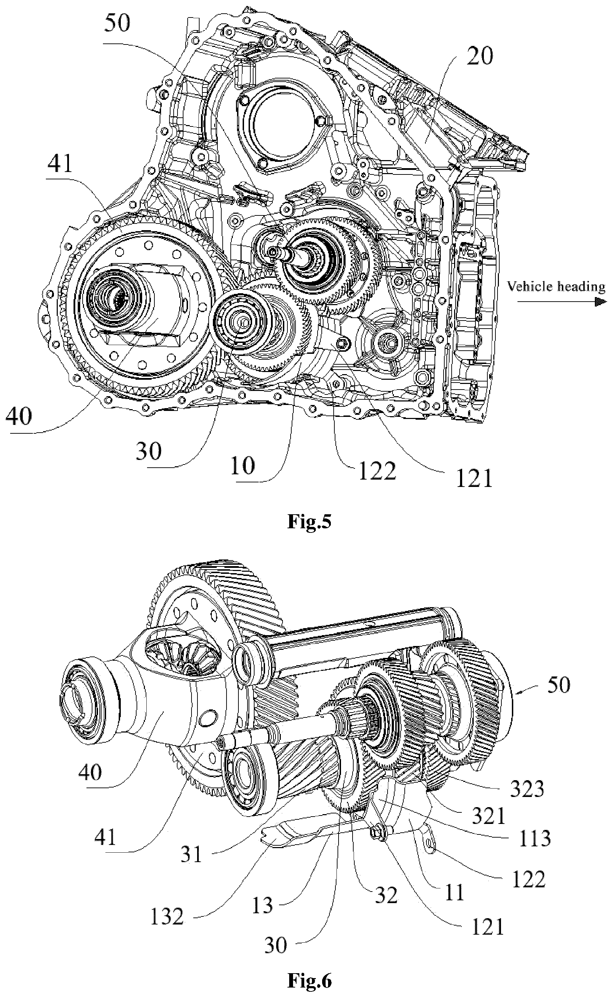

In some embodiments, as shown in Figs. 2 and 6, the connection part 12 includes a first mounting foot 121 and a second mounting foot 122. A distal end of the first mounting foot 121 away from the oil baffle body 11 is provided with a first mounting hole 1211, and a distal end of the second mounting foot 122 away from the oil baffle body 11 is provided with a second mounting hole 1221. The oil baffle 10 is fixedly connected to the transmission housing 20 via a first fastener (not shown in the figures) passing through the first mounting hole 1211 and a second fastener (not shown in the figures) passing through the second mounting hole 1221.

The connection part 12 is connected to the transmission housing 20 via fasteners, thereby securing the oil baffle 10 to the transmission housing 20. The first mounting foot 121 and second mounting foot 122 are both bent relative to the oil baffle body 11. This design not only facilitates the assembly of the oil baffle 10 but also prevents the connection points between the connection part 12 and the transmission housing 20 from being exposed to engine oil, thereby avoiding erosion of these connection points by the oil.

In some embodiments, as shown in Fig. 3, the first mounting foot 121 and the second mounting foot 122 are not directly opposite to each other but are arranged in an offset manner on either side of the oil baffle body 11. This configuration facilitates assembly and prevents local stress concentration in the oil baffle body 11.

For example, the first fastener may be a screw or a bolt, and the second fastener may be a screw or a bolt. Optionally, the connection part 12 may also be fixed to the mechanical oil pump 60, which is fixed to the transmission housing 20. That is, an oil pump housing of the mechanical oil pump 60 (not shown in the figures) forms part of the transmission housing 20.

In some embodiments, as shown in Fig. 3, the oil baffle body 11 has a first side wall 111 and a second side wall 112, and the first side wall 111 and the second side wall 112 are opposite to each other in an axial direction of the oil baffle body 11.

It should be noted that, the oil baffle body 11 is an arc-shaped plate with both the inner surface and the outer surface being arc-shaped surfaces, and the inner surface and the outer surface share a common central axis. The central axis is specifically defined as a straight line on which centers of circles corresponding to each arc constituting an arc surface lie. Accordingly, an axial direction of the oil baffle body 11 refers to an extending direction of the central axis of the oil baffle body 11.

As shown in Fig. 3, the first side wall 111 includes a first portion 1111 and a second portion 1112 circumferentially connected along the oil baffle body 11. The first portion 1111 is connected to an oil baffle extension 13, and a portion of the oil baffle extension 13 is located on a side of the first portion 1111 away from the second portion 1112.

The oil baffle 10 further includes an oil baffle extension 13, one side of which is connected to the first portion 1111 of the first side wall 111, and the other side of which extends away from the second side wall 112 along an axial direction of the oil baffle body 11. An orthographic projection of the oil baffle extension 13 on a set plane is partially overlapped with an orthographic projection of the oil baffle body 11 on the set plane. The set plane is perpendicular to the axial direction of the oil baffle body 11.

"Partially overlapped" means that a part of the orthographic projection of the oil baffle extension 13 on the set plane overlaps with the orthographic projection of the oil baffle body 11 on the set plane, and another part of the orthographic projection of the oil baffle extension 13 on the set plane is located outside the orthographic projection of the oil baffle body 11 on the set plane.

As shown in Fig. 3, in the side wall of the oil baffle extension 13 adjacent to the oil baffle body 11, only a part of the side wall is connected to the first portion 1111 of the first side wall 111 of the oil baffle body 11, and the other part of the side wall of the oil baffle extension 13 is suspended and is not connected to or in contact with the oil baffle body 11. Accordingly, as shown in Fig. 6, after the oil baffle 10 is mounted on the transmission housing 20, at least a portion of the oil baffle extension 13 can protrude below the output shaft 30 to shield oil splashed downward at the engagement between a gear 41 of the differential 40 and a power output gear 31 of the output shaft 30. The engine oil at the engagement is effectively guided to flow out forward and upward along an inner surface of the oil baffle extension 13, so as to avoid the engine oil from colliding with irregular inner wall surfaces of the transmission housing and reduce the generation of bubbles.

The second portion 1112 of the first side wall 111 of the oil baffle body 11 is connected to the first mounting foot 121, and a distal end of the first mounting foot 121 extends away from the inner surface of the oil baffle body 11. The second side wall 112 of the oil baffle body 11 is connected to the second mounting foot 122, and a distal end of the second mounting foot 122 extends away from the inner surface of the oil baffle body 11. Therefore, the first mounting foot 121 and the second mounting bracket are disposed away from the output shaft 30 to avoid affecting the rotation of the output shaft 30 and facilitate fixation with the transmission housing 20.

Optionally, the inner surface of the oil baffle body 11 is a smooth arc-shaped plate surface.

Optionally, the oil baffle extension 13 is also an arc-shaped plate and its inner surface is a smooth arc-shaped plate surface.

Therefore, after the engine oil splashes to the inner surface of the oil baffle body 11 or the inner surface of the oil baffle extension 13, the engine oil can flow along the inner surface of the oil baffler body 11 or the oil baffler extension 13. This design minimizes adhesion of the oil to the oil baffle 10, thereby reducing the loss of engine oil.

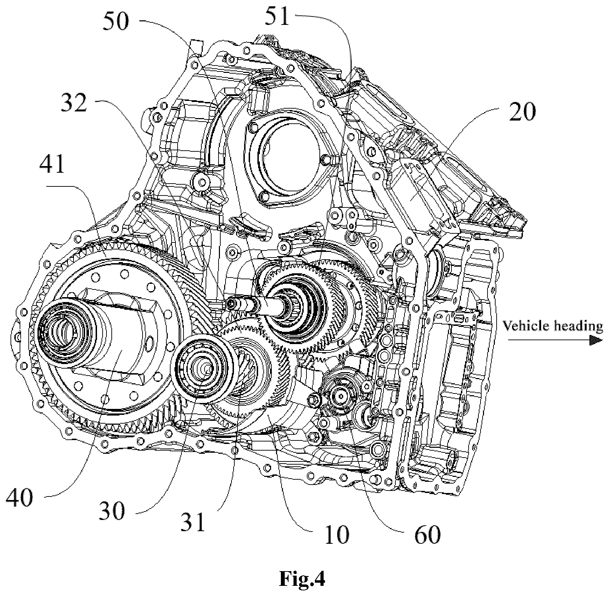

In some embodiments of the present application, as shown in Figs. 2 and 3, the oil baffle body 11 includes a first plate 113 and a second plate 114 which are connected in the axial direction of the oil baffle body 11, the first plate 113 is connected to the oil baffle extension 13, and the second plate 114 is located at a side of the first plate 113 away from the oil baffle extension 13. As shown in Figs. 4 and 6, plate surfaces of the first plate 113 and the second plate 114 are both arc-shaped.

As shown in Figs. 2 and 6, the first plate 113 is closer to the center axis of the oil baffle body 11 than the second plate 114 in the thickness direction of the oil baffle body 11. After the oil baffle 10 is fixed to the transmission housing 20, as shown in Fig. 6, the first plate 113 encloses an outside of a gear having a smaller diameter in the gear position driven gear 32, and the second plate 114 encloses an outside of a gear having a smaller diameter in the gear position driven gear 32, so that it is possible to reduce the splashing distance of the oil splashed at each position of the gear position driven gear 32.

Referring to Fig. 2, the oil baffle extension 13 includes a third plate 131 and a fourth plate 132 connected in an axial direction of the oil baffle extension 13, the third plate 131 is connected to the oil baffle body 11, and the fourth plate 132 is located at one side of the third plate 131 away from the oil baffler body 11. The axial direction of the oil baffle extension 13 is an extending direction of a central axis of the oil baffle extension 13. As shown in Fig. 6, plate surfaces of the third plate 131 and the fourth plate 132 are both arc-shaped surfaces, and the plate surfaces of the third plate 131 and the fourth plate 132 share a common central axis, and the central axis is specifically defined as a straight line on which centers of circles corresponding to each arc constituting an arc surface lie. The axial direction of the oil deflector extension 13 therefore refers to the direction in which the central axis of the oil deflector extension 13 extends. Accordingly, the axial direction of the oil baffle extension 13 is the extending direction of the central axis of the oil baffle extension 13.

In some embodiments, the central axis of the oil baffle body 11 coincides with the central axis of the oil baffle extension 13. As shown in Figs. 2 and 6, the third plate 131 is closer to the central axis of the oil baffle extension 13 than the fourth plate 132 in the thickness direction of the oil baffle extension 13. As shown in Fig. 6, after the oil baffle 10 is fixed on the transmission housing 20, the third plate 131 encloses the outside of the power output gear 31 of the output shaft 30, and the fourth plate 132 avoids an inner wall of the transmission housing 20.

Optionally, as shown in Fig. 3, the oil baffle body 11 and the oil baffle extension 13 are integrally formed. An inner surface of the first plate 113 and an inner surface of the third plate 131share a common arc-shaped surface, and the first mounting foot 121 and the second mounting foot 122 are formed by cutting and bending a portion of a plate material which is used for manufacturing the oil baffle 10.

The embodiments of the present application further provide an oil baffle for a dedicated hybrid transmission, and the structure thereof is illustrated in Figs. 2 to 7. Referring to Fig. 2 to Fig. 7, a differential 40 and an output shaft 30 are arranged at a bottom of a transmission housing 20. The output shaft 30 is located in front of the differential 40. A differential gear 41 is engaged with an output shaft power output gear 31 at an end of the output shaft 30. An input shaft 50 is positioned diagonally in front of and above the output shaft 30. An input gear 51 on the input shaft 50 is engaged with a gear position driven gear 32 on the output shaft 30, and the input shaft 50 is driven to rotate by torque provided by an engine and/or a motor. The oil baffle 10 fixedly connected to the transmission housing 20 is spaced apart a front lower position of the gear position driven gear 32 on the output shaft 300. "Spaced apart" means that the oil baffle 10 encloses at least a portion of the gear position driven gear 32 with a gap between the oil baffle 10 and the gear position driven gear 32.

In one example, the engine (not shown in the figures) is connected in series with a second motor (not shown in the figures) through a clutch (not shown in the figures) and is commonly connected to the input shaft 50, so as to realize that power output by the engine and power output by the second motor are commonly transmitted to the input shaft 50 and the input shaft 50 then transmits the power to the output shaft 30 through gear engagement. Alternatively, the first motor (not shown in the figures) may also directly transmit the power to the output shaft 30, and finally the output shaft 30 transmits the power to a wheel end by the engagement between the power output gear 31 at the end of the output shaft 30 and the differential gear 41. In the process of gear transmission, the engine oil in the transmission housing 20 is stirred by the gear position driven gear 32 on the output shaft 30 and the differential gear 41, because the output shaft 30 is located in the middle of the bottom of the transmission housing 20, the front of the differential gear 41 is shielded by the gear on the output shaft 30, and the remaining directions of the differential gear 41 are closely enclosed by the transmission housing 20, so that the differential gear 41 has a limited effect on oil stirring in the dedicated hybrid transmission, and the primary oil-stirring action is generated by the gear position driven gear 32 on the output shaft 30. As shown in Figs. 4 and 5, when the vehicle moves forward, the differential gear 41 rotates counterclockwise in the figures, the output shaft power output gear 31 on the output shaft 30 is externally engaged with the differential gear 41, the output shaft 30 rotates clockwise, and the engine oil is driven to splash forward by the shaft gear below the input shaft 30. Thus, the oil baffle 10 enclosing the front lower position of the gear position driven gear 32 on the output shaft 30 can directly block the oil splashing in the parabolic direction to shorten the oil splashing path most efficiently, and the blocked oil flowing out from the surface of the oil baffle can better realize oil guiding, so that each part in the transmission is lubricated by the engine oil and the generation of bubbles is reduced.

In order to reduce the oil stirring effect of the differential gear 41, the oil baffle extension 13 in the axial direction of the oil baffle 10 extends to the front lower position of the differential gear 41 and encloses a lower area of the output shaft power output gear 31. In the above solution, the differential gear 41 and the output shaft power output gear 31 on the output shaft 30 are externally engaged for transmission, so that the engine oil therebetween is thrown to the lower part of an engagement area, and the arrangement of the oil baffle extension 13 can effectively guide the engine oil at this position to flow out forward and upward along the inner plate surface (i.e., the inner surface) of the oil baffle extension 13, thereby preventing the engine oil from colliding with irregular inner wall surfaces of the transmission housing 20 and reducing the generation of bubbles.

The gear position driven gear 32 on the output shaft 30 includes a second-gear driven gear 322, a first-gear driven gear 321 and a third-gear driven gear 323, which are arranged adjacent to each other and spaced apart from each other in sequence, and the second-gear driven gear 322 is closest to the output shaft power output gear 31. The body of the oil baffle 10 (i.e., the oil baffle body 11) encloses a front lower position of the first-gear driven gear 321 and the second-gear driven gear 322. Surfaces of the oil baffle body 11 and the oil baffle extension 13 facing the output shaft 30 and/or the differential gear 41 are smooth arc-shaped plate surfaces.

In the above solution, since the first-gear driven gear 321 and the second-gear driven gear 322 on the output shaft 30 produce the greatest oil stirring effect while the third-gear driven gear 323 is located at the innermost side of the output shaft 30 and its front is close to the inner wall of the transmission housing 20 so its own damping of stirring oil is relatively large, the oil baffle body 11 disposed at the front lower position of the first-gear driven gear 321 and the second-gear driven gear 322 can make the crowded internal space of the transmission to be maximally utilized. The surface of the oil baffle 10 facing the output shaft 30 is a smooth arc-shaped plate surface, which can conform to the parabolic path of engine oil splashing, improve the oil baffle efficiency, and reduce the possibility of bubbles.

In order to facilitate the fixed installation of the oil baffle 10, a mechanical oil pump 60 fixedly connected with the transmission housing 20 is arranged in front of the oil baffle 10. An upper edge of the oil baffle extension 13 is lower than an upper edge of the oil baffle body 11. A first mounting foot 121 extends forward from a stepped transition edge between the upper edge of the oil baffle extension 13 and the upper edge of the oil baffle body 11, and a second mounting foot 122 extends forward from a left edge of the oil baffle body 11. The oil baffle 10 is fixedly connected to the mechanical oil pump 60 by bolts through a first mounting hole 1211 disposed at the distal end of the first mounting foot 121 and a second mounting hole 1221 disposed at the distal end of the second mounting foot 122. In the above solution, the upper edge of the oil baffle extension 13 is lower than the upper edge of the oil baffle body 11, that is, a vacant part above the oil baffle extension 13 is used to avoid a motion mechanism (not shown in the figures) of a C2C3 clutch and fixed parts (not shown in the figures) such as the suction rate. Since the mechanical oil pump 60 is located in front of the third-gear driven gear 323, the outer wall surface of the mechanical oil pump 60 also functions as an oil baffle, so that the covering area of the oil baffle 10 can be reduced. The oil baffle 10 is bolted to the mechanical oil pump 60 via the first mounting support foot 121 and the second mounting support foot 122. Compared to the solution that the oil baffle 10 is directly bolted to the transmission housing 20, the same fixing effect has been achieved, it is more convenient to arrange and mount the oil baffle 10, and manufacturing material has been saved.

The oil baffle body 11 includes a first step plate, also referred to as a first plate 113, which encloses a front of the second-gear driven gear 322 and is close to the output shaft 30. The oil baffle extension 13 has a second step plate, also referred to as a fourth plate 132, which is disposed away from the differential gear 41 at a right edge of the oil baffle extension 13. In the above solution, the design of the second step plate can avoid the inner wall of the transmission housing 20, a diameter of the second-gear driven gear 322 is smaller than that of the first-gear driven gear 321, and the first step plate can make the oil baffle 10 closer to the second-gear driven gear 322, thereby further shortening the oil splashing path and reducing the generation of bubbles.

As shown in Figs. 4 to 7, a dedicated hybrid transmission includes a transmission housing 20, an output shaft 30, a differential 40, an input shaft 50, and an oil baffle 10. The output shaft 30 and the differential 40 are disposed at a bottom of the transmission housing 20, and the output shaft 30 is located in front of the differential 40. The output shaft 30 is provided with an output shaft power output gear 31 and a gear position driven gear 32, and the output shaft power output gear 31 is located at the end of the output shaft 30. The differential 40 is provided with a differential gear 41, and the differential gear 41 is engaged with the output shaft power input gear 31. The input shaft 50 is positioned diagonally in front of and above the output shaft 30 and is driven to rotate by torque provided by an engine and/or a motor. The input shaft 50 is provided with an input gear 51, and the input gear 51 is engaged with the gear position driven gear 32. The oil baffle 10 is fixedly connected with the transmission housing 20, and the oil baffle 10 encloses a front lower position of the gear position driven gear 32 and is spaced apart with the gear position driven gear 32.

In the dedicated hybrid transmission provided by the embodiments of the present application, the oil baffle 10 is fixed on the transmission housing 20 and arranged around the gear position driven gear 32, so that when the gear position driven gear 32 on the output shaft 30 generates an oil stirring action to drive the engine oil to splash forward during the driving process of the vehicle, the oil baffle 10 enclosing the gear position driven gear 32 can form a barrier in a parabolic direction of oil splashing, so that the oil splashes onto an inner surface of the oil baffle 10, thereby shortening a splashing distance of the oil. The inner surface of the oil baffle 10 can guide the oil splashed onto the oil baffle 10 back to the inside of the transmission, such that components in the transmission are lubricated by the engine oil, and the same time the generation of bubbles is reduced and the oil stirring loss is also reduced, but the transmission efficiency of mechanical components is improved.

In some embodiments of this application, as shown in Figs. 2 and 3, the oil baffle 10 includes an oil baffle body 11 and a connection part 12. The oil baffle body 11 is an arc-shaped plate and encloses a gear position driven gear 32. The connection part 12 is connected to the oil baffle body 11 and is fixedly connected to the transmission housing 20.

The arc-shaped surface of the arc-shaped plate can fit the parabolic shape of oil splashing, so that a better shielding effect is achieved, the generation of bubbles is reduced, and the oil stirring loss is reduced.

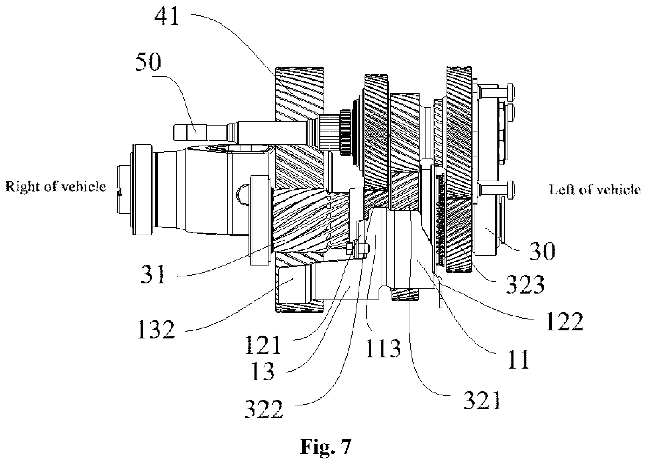

In some embodiments of this application, as shown in Figs. 6 and 7, the gear position driven gear 32 includes a second-gear driven gear 322, a first-gear driven gear 321 and a third-gear driven gear 323, which are arranged adjacent to each other and spaced apart from each other in sequence. The second-gear driven gear 322 is closest to the output shaft power output gear 31. The oil baffle body 11 encloses a front lower position of the first-gear driven gear 321 and the second-gear driven gear 322.

Since the first-gear driven gear 321 and the second-gear driven gear 322 on the output shaft 30 produce the greatest oil stirring effect while the third-gear driven gear 323 is located at the innermost side of the output shaft 30 and its front is close to the inner wall of the transmission housing 20 so its own damping of stirring oil is relatively large, the oil baffle body 11 disposed at the front lower position of the first-gear driven gear 321 and the second-gear driven gear 322 can make the crowded internal space of the transmission to be maximally utilized.

In some embodiments of the present application, the connection part 12 includes a first mounting foot 121 and a second mounting foot 122. A distal end of the first mounting foot 121 away from the oil baffle body 11 is provided with a first mounting hole 1211, and a distal end of the second mounting foot 122 away from the oil baffle body 11 is provided with a second mounting hole 1221. The oil baffle 10 is fixedly connected to the transmission housing 20 via a first fastener passing through the first mounting hole 1211 and a second fastener passing through the second mounting hole 1221.

In some embodiments of the present application, the dedicated hybrid transmission includes a mechanical oil pump 60 disposed in front of the oil baffle 10. The transmission housing 20 includes a main housing and an oil pump housing (not shown in the figures) of the mechanical oil pump 60. The oil pump housing is fixedly connected to the main housing, and the oil baffle 10 is fixedly connected to the oil pump housing by the first fastener passing through the first mounting hole 1211 and the second fastener passing through the second mounting hole 1221.

By connecting the oil baffle 10 to the mechanical oil pump 60, the oil baffle 10 is easily installed and fixed. In addition, the mechanical oil pump 60 is located in front of the third-gear driven gear 323, the outer wall surface of the mechanical oil pump 60 also functions as an oil baffle so that the covering area of the oil baffle 10 can be reduced. The oil baffle 10 is bolted to the mechanical oil pump 60 via the first mounting support foot 121 and the second mounting support foot 122. Compared to the solution that the oil baffle 10 is directly bolted to the transmission housing 20, the same fixing effect has been achieved, it is more convenient to arrange and mount the oil baffle 10, and manufacturing material has been saved.

In some embodiments of the present application, the oil baffle body 11 has a first side wall 111 and a second side wall 112, which are opposite to each other in an axial direction of the oil baffle body 11, and the axial direction is an extending direction of a central axis of the oil baffle body 11. The oil baffle 10 further includes an oil baffle extension 13. One side of the oil baffle extension 13 is connected to a portion of the first side wall 111, and the other side of the oil baffle extension 13 extends to a front lower position of the differential gear 41 in a direction away from the second side wall 112 along the axial direction of the oil baffle body 11, and encloses a lower area of the output shaft power output gear 31. The oil baffle extension 13 is spaced apart from the output shaft power output gear 31, and an orthographic projection of the oil baffle extension 13 on a set plane is partially overlapped with an orthographic projection of the oil baffle body 11 on the set plane.

In some embodiments of this application, the first side wall 111 includes a first portion 1111 and a second portion 1112 circumferentially connected along the oil baffle body 11. The first portion 1111 is connected to an oil baffle extension 13, and a portion of the oil baffle extension 13 is located on a side of the first portion 1111 away from the second portion 1112. The second portion 1112 is connected to the first mounting foot 121, and a distal end of the first mounting foot 121 extends in a direction away from the inner surface of the oil baffle body 11, and the second mounting foot 122 is connected to the second side wall 112, and a distal end of the second mounting foot 122 extends in a direction away from the inner surface of the oil baffle body 11.

In the above solution, the oil baffle extension 13 and the oil baffle body 11 have a misaligned portion, that is, a vacant part exists above the oil baffle extension 13 and this is used to avoid a motion mechanism of a clutch and fixed parts such as the suction rate.

In some embodiments of this application, the surface of the oil baffle body 11 facing the output shaft 30 and/or the differential gear 41 is a smooth arc-shaped plate surface, and/or, the oil baffle extension 13 is an arc-shaped plate and the surface of the oil baffle extension 13 facing the output shaft 30 and/or the differential gear 41 is a smooth arc-shaped plate surface.

The surface of the oil baffle 10 facing the output shaft 30 is a smooth arc-shaped plate surface, which can conform to the parabolic path of engine oil splashing, improve the oil baffle efficiency, and reduce the possibility of bubbles.

In some embodiments of the present application, the oil baffle body 11 includes a first plate 113 and a second plate 114 which are connected in the axial direction of the oil baffle body 11, the first plate 113 is connected to the oil baffle extension 13, and the second plate 114 is located at a side of the first plate 113 away from the oil baffle extension 13. Plate surfaces of the first plate 113 and the second plate 114 are both arc-shaped. The axial direction of the oil baffle body 11 is the extending direction of the central axis of the oil baffle body 11. The first plate 113 is closer to the central axis of the oil baffle body 11 than the second plate 114 in the thickness direction of the oil baffle body 11.

For example, the first plate 113 encloses a front of the second-gear driven gear 322, and the first plate 113 is closer to the central axis of the output shaft 30 than the second plate 114.

In some embodiments of the present application, the oil baffle extension 13 includes a third plate 131 and a fourth plate 132 connected in an axial direction of the oil baffle extension 13, the third plate 131 is connected to the oil baffle body 11, and the fourth plate 132 is located at one side of the third plate 131 away from the oil baffler body 11. Plate surfaces of the third plate 131 and the fourth plate 132 are both arc surfaces. The axial direction of the oil baffle extension 13 is an extending direction of a central axis of the oil baffle extension 13. The third plate 131 is closer to the central axis of the oil baffle extension 13 than the fourth plate 132 in the thickness direction of the oil baffle extension 13.

For example, the third plate 131 encloses a lower position of the output shaft power output gear 31 and is farther away from the differential gear 41 than the fourth plate 132.

Embodiments of the present application also provide a vehicle that is a hybrid vehicle. The vehicle includes the oil baffle 10 according to any one of the embodiments described above, and/or the vehicle includes the dedicated hybrid transmission according to any one of the embodiments described above.

As the vehicle provided by the embodiment of the present application is provided with the oil baffle 10 and/or the dedicated hybrid transmission, its power components have higher mechanical transmission efficiency, so that the vehicle has more excellent power performance, and has good power performance in driving scenarios.

Other embodiments of the present application will occur to those skilled in the art upon consideration of the specification and practice of the application disclosed herein. This application is intended to cover any variations, uses, or adaptations of the present application that follow the general principles of the present application and include common general knowledge or customary technical means in the art not disclosed herein. The specification and examples are to be considered as exemplary only.

It is to be understood that this application is not limited to the precise constructions which have been described above and illustrated in the accompanying drawings and that various modifications and changes may be made without departing from the scope thereof. The scope of the present application is limited only by the appended claims.

## Claims

1. An oil baffle for a dedicated hybrid transmission, wherein the oil baffle (10) comprises an oil baffle body (11) and a connection part (12),
the oil baffle body (11) is an arc-shaped plate and is configured to enclose a part of a gear position driven gear (32) in the dedicated hybrid transmission; and
the connection part (12) is connected to the oil baffle body (11) and is configured to fix the oil baffle (10) on a transmission housing (20) of the dedicated hybrid transmission.

2. The oil baffle according to claim 1, wherein the connection part (12) comprises a first mounting foot (121) and a second mounting foot (122),
a distal end of the first mounting foot (121) away from the oil baffle body (11) is provided with a first mounting hole (1211), and a distal end of the second mounting foot (122) away from the oil baffle body (11) is provided with a second mounting hole (1221); and
the oil baffle (10) is fixedly connected to the transmission housing (20) via a first fastener passing through the first mounting hole (1211) and a second fastener passing through the second mounting hole (1221).

3. The oil baffle according to claim 2, wherein the oil baffle body (11) comprises a first side wall (111) and a second side wall (112) which are opposite to each other in an axial direction of the oil baffle body (11), and the axial direction is an extending direction of a central axis of the oil baffle body (11);
the oil baffle (10) further comprises an oil baffle extension (13), one side of the oil baffle extension (13) is connected to a portion of the first side wall (111), and another side of the oil baffle extension (13) extends away from the second side wall (112) along the axial direction of the oil baffle body (11); and
an orthographic projection of the oil baffle extension (13) on a set plane is partially overlapped with an orthographic projection of the oil baffle body (11) on the set plane, and the set plane is perpendicular to the axial direction of the oil baffle body (11).

4. The oil baffle according to claim 3, wherein the first side wall (111) comprises a first portion (1111) and a second portion (1112) circumferentially connected along the oil baffle body (11),
the first portion (1111) is connected to the oil baffle extension (13), and a portion of the oil baffle extension (13) is located on a side of the first portion (1111) away from the second portion (1112);
the second portion (1112) is connected to the first mounting foot (121) and the distal end of the first mounting foot (121) extends in a direction away from an inner surface of the oil baffle body (11); and
the second mounting foot (122) is connected to the second side wall (112), and the distal end of the second mounting foot (122) extends in the direction away from the inner surface of the oil baffle body (11).

5. The oil baffle according to claim 3, wherein an inner surface of the oil baffle body (11) is a smooth arc-shaped plate surface, and/or the oil baffle extension (13) is an arc-shaped plate and an inner surface of the oil baffle extension (13) is a smooth arc-shaped plate surface.

6. The oil baffle according to claim 3, wherein the oil baffle body (11) comprises a first plate (113) and a second plate (114) which are connected in the axial direction of the oil baffle body (11), the first plate (113) is connected to the oil baffle extension (13), the second plate (114) is located at a side of the first plate (113) away from the oil baffle extension (13), plate surfaces of the first plate (113) and the second plate (114) are both arc-shaped, and the axial direction of the oil baffle body (11) is the extending direction of the central axis of the oil baffle body (11); and
the first plate (113) is closer to the central axis of the oil baffle body (11) than the second plate (114) in a thickness direction of the oil baffle body (11).

7. The oil baffle according to claim 3, wherein the oil baffle extension (13) comprises a third plate (131) and a fourth plate (132) connected in an axial direction of the oil baffle extension (13);
the third plate (131) is connected to the oil baffle body (11), and the fourth plate (132) is located at one side of the third plate (131) away from the oil baffler body (11);
plate surfaces of the third plate (131) and the fourth plate (132) are both arc surfaces, and the axial direction of the oil baffle extension (13) is an extending direction of a central axis of the oil baffle extension (13), and
the third plate (131) is closer to the central axis of the oil baffle extension (13) than the fourth plate (132) in a thickness direction of the oil baffle extension (13).

8. A dedicated hybrid transmission, comprising a transmission housing (20), an output shaft (30), a differential (40), an input shaft (50) and an oil baffle (10), wherein,
the output shaft (30) and the differential (40) are arranged at a bottom of the transmission housing (20) and the output shaft (30) is located in front of the differential (40), wherein the output shaft (30) is provided with an output shaft power output gear (31) at an end of the output shaft (30) and a gear position driven gear (32), the differential (40) is provided with a differential gear (41) , and the differential gear (41) is engaged with the output shaft power output gear (31);
the input shaft (50) is positioned diagonally in front of and above the output shaft (30) and is driven to rotate by torque provided by an engine and/or a motor, wherein the input shaft (50) is provided with an input gear (51), and the input gear (51) is engaged with the gear position driven gear (32); and
the oil baffle (10) is fixedly connected to the transmission housing (20), and the oil baffle (10) encloses a front lower position of the gear position driven gear (32) and is spaced apart from the gear position driven gear (32).

9. The dedicated hybrid transmission according to claim 8, wherein the oil baffle (10) comprises an oil baffle body (11) and a connection part (12),
the oil baffle body (11) is an arc-shaped plate and encloses the gear position driven gear (32); and
the connection part (12) is connected to the oil baffle body (11) and is fixedly connected to the transmission housing (20).

10. The dedicated hybrid transmission according to claim 9, wherein the gear position driven gear (32) comprises a second-gear driven gear (322), a first-gear driven gear (321) and a third-gear driven gear (323), which are arranged adjacent to each other and spaced apart from each other in sequence, the second-gear driven gear (322) is closest to the output shaft power output gear (31), and the oil baffle body (11) encloses a front lower position of the first-gear driven gear (321) and the second-gear driven gear (322).

11. The dedicated hybrid transmission according to claim 10, wherein the connection part (12) comprises a first mounting foot (121) and a second mounting foot (122),
a distal end of the first mounting foot (121) away from the oil baffle body (11) is provided with a first mounting hole (1211), and a distal end of the second mounting foot (122) away from the oil baffle body (11) is provided with a second mounting hole (1221), and
the oil baffle (10) is fixedly connected to the transmission housing (20) via a first fastener passing through the first mounting hole (1211) and a second fastener passing through the second mounting hole (1221).

12. The dedicated hybrid transmission according to claim 11, wherein the dedicated hybrid transmission comprises a mechanical oil pump (60) disposed in front of the oil baffle (10); and
the transmission housing (20) comprises a main housing and an oil pump housing of the mechanical oil pump (60), the oil pump housing is fixedly connected to the main housing, and the oil baffle (10) is fixedly connected to the oil pump housing by the first fastener passing through the first mounting hole (1211) and the second fastener passing through the second mounting hole (1221).

13. The dedicated hybrid transmission according to claim 11, wherein the oil baffle body (11) comprises a first side wall (111) and a second side wall (112) which are opposite to each other in an axial direction of the oil baffle body (11), and the axial direction is an extending direction of a central axis of the oil baffle body (11);
the oil baffle (10) further comprises an oil baffle extension (13), one side of the oil baffle extension (13) is connected to a portion of the first side wall (111), another side of the oil baffle extension (13) extends to a front lower position of the differential gear (41) in a direction away from the second side wall (112) along the axial direction of the oil baffle body (11) and encloses a lower area of the output shaft power output gear (31), and the oil baffle extension (13) is spaced apart from the output shaft power output gear (31); and
an orthographic projection of the oil baffle extension (13) on a set plane is partially overlapped with an orthographic projection of the oil baffle body (11) on the set plane.

14. The dedicated hybrid transmission according to claim 13, wherein the first side wall (111) comprises a first portion (1111) and a second portion (1112) circumferentially connected along the oil baffle body (11),
the first portion (1111) is connected to the oil baffle extension (13), and a portion of the oil baffle extension (13) is located on a side of the first portion (1111) away from the second portion (1112);
the second portion (1112) is connected to the first mounting foot (121) and the distal end of the first mounting foot (121) extends in a direction away from an inner surface of the oil baffle body (11); and
the second mounting foot (122) is connected to the second side wall (112), and the distal end of the second mounting foot (122) extends in the direction away from the inner surface of the oil baffle body (11).

15. The dedicated hybrid transmission according to claim 13, wherein an inner surface of the oil baffle body (11) facing the output shaft (30) and/or the differential gear (41) is a smooth arc-shaped plate surface, and/or
the oil baffle extension (13) is an arc-shaped plate and an inner surface of the oil baffle extension (13) facing the output shaft (30) and/or the differential gear (41) is a smooth arc-shaped plate surface.

16. The dedicated hybrid transmission according to claim 13, wherein the oil baffle body (11) comprises a first plate (113) and a second plate (114) which are connected in the axial direction of the oil baffle body (11), the first plate (113) is connected to the oil baffle extension (13), the second plate (114) is located at a side of the first plate (113) away from the oil baffle extension (13), plate surfaces of the first plate (113) and the second plate (114) are both arc-shaped, and the axial direction of the oil baffle body (11) is the extending direction of the central axis of the oil baffle body (11); and
the first plate (113) is closer to the central axis of the oil baffle body (11) than the second plate (114) in a thickness direction of the oil baffle body (11).

17. The dedicated hybrid transmission according to claim 16, wherein the first plate (113) encloses a front of the second-gear driven gear (322), and the first plate (113) is closer to a central axis of the output shaft (30) than the second plate (114).

18. The dedicated hybrid transmission according to claim 16, wherein the oil baffle extension (13) comprises a third plate (131) and a fourth plate (132) connected in an axial direction of the oil baffle extension (13);
the third plate (131) is connected to the oil baffle body (11), the fourth plate (132) is located at one side of the third plate (131) away from the oil baffler body (11);
plate surfaces of the third plate (131) and the fourth plate (132) are both arc surfaces, and the axial direction of the oil baffle extension (13) is an extending direction of a central axis of the oil baffle extension (13); and
the third plate (131) is closer to the central axis of the oil baffle extension (13) than the fourth plate (132) in a thickness direction of the oil baffle extension (13).

19. The dedicated hybrid transmission according to claim 18, wherein the third plate (131) encloses a lower area of the output shaft power output gear (31), and the third plate (131) is farther from the differential gear (41) than the fourth plate (132).

20. A vehicle comprising the oil baffle (10) as defined in any one of claims 1 to 7, or the dedicated hybrid transmission as defined in any one of claims 8 to 19.
